## Europäisches Patentamt

## European Patent Office

## Office européen des brevets

(11) Publication number: **0 203 136**
**B1**

# EUROPEAN PATENT SPECIFICATION

(45) Date of publication of patent specification: **14.06.89**

(51) Int. Cl.⁴: **C 08 L 77/00, C 08 K 5/54**

(21) Application number: **85905899.2**

(22) Date of filing: **20.11.85**

(86) International application number:
**PCT/NL85/00048**

(87) International publication number:
**WO 86/03214 05.06.86 Gazette 86/12**

(54) **POLYAMIDE RESIN COMPOSITIONS.**

(30) Priority: **21.11.84 JP 244389/84**

(43) Date of publication of application:
**03.12.86 Bulletin 86/49**

(45) Publication of the grant of the patent:
**14.06.89 Bulletin 89/24**

(84) Designated Contracting States:
**AT BE CH DE FR GB IT LI NL SE**

(56) References cited:
**US-A-4 399 247**

(73) Proprietor: **STAMICARBON B.V.**
**P.O. Box 53**
**NL-6160 AB Geleen (NL)**

(72) Inventor: **CHIBA, Kazumasa Nagoya Plant**
**Toray Industries, Inc. 9-1, Ohe-cho, Minato-ku**
**Nagoya (JP)**

Courier Press, Leamington Spa, England.

**Description**

The present invention is related to polytetramethylene adipamide resin compositions with high melt-stability.

Polytetramethylene adipamide (nylon 4,6) is a polyamide with outstanding mechanical properties and an excellent behaviour at high temperature. Its high thermal deformation temperature (HDT) is one of its characteristics. However due to its high melting temperature it is less stable in the melt, which is manifested in decomposition and discoloration of the material.

It is known in the art to add various phosphoric compounds such as phosphoric acid, phosphine halide or phosphonium halides to polyamide resins to suppress decomposition and to obtain less coloured moldings.

However in the case of nylon 4,6 these stabilizing agents are insufficiently effective and the viscosity of the nylon 4,6 is readily decreased after melting.

Also the other stabilizers commonly used for polyamide resins, such as copper halides and other copper compounds, and manganous salts, are insufficiently effective.

It is therefore the object of the invention to find compounds that are capable to suppress effectively the thermal decomposition of nylon 4,6.

It has been found by the inventor that some specific silicon compounds work effectively as thermal stabilizers for nylon 4,6.

What is invented is a polyamide resin composition consisting of 100 parts by weight of polyamides containing tetramethylene adipamide as main component and 0,01 to 3 parts by weight of at least one compound selected out of the groups of aminosilanes, epoxysilanes and vinylsilanes.

It is known to use silanes as primers for instance for glass fiber to improve the adhesion of glass fibers in polyamide. However it is very unexpected that these same compounds show such superior properties as thermal stabilizers in compositions with nylon 4,6.

The reason for this unexpected effect cannot be attributed to physical effects, but most probably the effect will be caused by some chemical interaction between the endgroups of the polyamide resin molecules and the silane molecules.

The polyamides according to the subject invention are copolymers and mixtures of polyamides containing polytetramethyleneadipamide and tetramethylene adipamide as main components. In principle there exist no limitations concerning the copolymer and mixture components, so that all known amide-forming compounds can be chosen. Representative among the former are 6 - aminocaproic, 11 - aminoundecanic, 12 - aminododecanic, paraminomethylbenzoic and other amino acids; ε - caprolactam, ω - laurolactam and other lactams; hexamethylenediamine, undecamethylenediamine, dodecamethylene-diamine, 2.2.4 -/2,2,4 - trimethylhexamethylenediamine, 5 - methylnonamethylenediamine, methaxylirenediamine, paraxylirerediamine, 1,3- and 1,4-bis (aminomethyl)cyclohexanes, 1 - amino - 3 - aminomethyl - 3,5,5 - trimethylcyclohexane, bis(4 - aminocyclohexyl)methane, bis(3 - methyl - 4 - aminocyclohexyl)methane, 2,2 - bis(4 - aminocyclohexyl)propane, bis - (aminopropyl)piperazine, aminoethylpiperazine and other diamines and adipic acids; and adipic, suberic, azelaic, dodecane-2, terephthalic, isophthalic, 2 - chloroterephthalic, 2 - methylterephthalic, 5 - methylisophthalic, 5 - sodiumsulfoisophthalic, hexahydroterephthalic, hexahydroisophthalic, diglycolic and other dicarboxylic acids. The latter include the polyamides being composed thereof.

Polyamides containing tetramethylene as main component, for instance more than 80 mole percent, can be produced by any known process. However preference should be given to the processes disclosed in US patent publications 4,460,762, 4,408,036 and 4,463,166 or EP—A—0039524, 0038094 and 0077106.

High molecular weight polyamides should be produced through solid-phase after condensation in a water-vapor containing atmosphere of prepolymers having small contents of cyclic endgroups, that are produced under specific conditions or in 2 - pyrrolidone, N - methylpyrrolidone or another polar organic solvent. Their degree of polymerization can vary in principle over a wide range. The polymers having a relative viscosity between 2.0 and 6.0 g/dl, as measured in a solution of 1 gram in 100 ml 98% by weight sulphuric acid, are preferred.

Used as stabilizer according to the subject invention should be at least one of the compounds selected out of the groups of amino-silanes, epoxysilanes and vinylsilanes. Representative thereamong are

γ-aminopropyltrimethoxysilane, γ-aminopropyltriethoxysilane,
N-β-(aminoethyl)-γ-aminopropyltrimethoxysilane,
bis(β-hydroxyethyl)-γ-aminopropyltriethoxysilane,
γ-(2-aminoethyl)aminopropylmethyldimethoxysilane,
γ-anilinopropyltrimethoxysilane, γ-glycidoxypropyltrimethoxysilane,
γ-glycidoxypropyltriethoxysilane, β-(3,4-epoxycyclohexyl)-ethyltrimethoxysilane,
vinyltrimethoxysilane, γ-methacryloxypropyltrimethoxysilane,
N-β-(N-vinylbenzylamonioethyl)-aminopropyltrimethoxysilane, vinyltriacetoxysilane and so forth. These compounds can be used alone or in combinations of two or more.

The resin compositions according to the subject invention should be produced by adding 0.01 to 3 parts by weight of silane compounds, preferably 0.02 to 2 parts by weight to 100 parts by weight of polytetramethylene adipamide. Silane contents less than 0.01 part or more than 3 parts by weight only result in insufficient suppression of the thermal decomposition or cause a considerable bleed-out to the surface of moldings or other undesirable phenomena respectively.

Other materials e.g. pigments, dyes, reinforcers, fillers, anti-oxidants, weather resistants, lubricants, nucleating agents, mold release agents, plasticizers, flame retardants, antistatics and other polymers may be added to the resin compositions according to the subject invention unless their moldabilities and physical properties are affected. Particularly the addition of reinforcers and fillers can be of importance. The fibrous and powdery reinforcers available therefor include more specifically glass fibers, asbestos fibers, carbon fibers, graphite fibers, wollastonite, talc, calcium carbonate, mica, -clay, potassium titanate whisker and glass beads.

The processes for producing resin compositions according to the subject invention are not limited. One of the most common ones is the melting and mixing of both components supplied to a one- or multi-shaft extruder eventually after premixing in solid form. The resin compositions according to the invention can be used for the production of moldings being superior in physical properties by injection molding, extrusion, blow-molding, compressive and the other molding methods being used for ordinary thermoplastic resins. They are useful for manufacturing various automotive parts, mechanical parts, electric and electronic parts, general miscellaneous goods and so forth.

(Embodiments)

The subject invention will be described in more detail in the following examples. The following methods were used to evaluate the characteristics of polymers and their moldings in the examples and comparative examples.

|  |  |
|---|---|
| (1) Relative viscosity: | JIS K6810 |
| (2) Thermal stability: Polymers were melted and kept at a temperature of 310°C and the variation in relative viscosity as a function of time was measured. | |
| (3) Tensile characteristic: | ASTM D638 |
| (4) Bending characteristic: | ASTM D790 |
| (5) Izod impact strength: | ASTM D256 |
| (6) Thermal deformation temperature: | ASTM D648 |

Example 1

A mixture prepared by adding 0,1 parts by weight of γ - aminopropyltriethoxysilane to 100 parts by weight of the nylon-4,6 powder having a relative viscosity of 3.90 was melted, kneaded and pelletized at a temperature of 305°C using a 40 mm-aperture extruder. These pellets were vacuum-dried, melted and kept at a temperature of 310°C. Only a small variation in relative viscosity could be observed, (see Table 1), thus showing an effective suppression of the decomposition rate.

The pellets were used for molding the various test pieces for measuring the different physical properties by an injection molder with its cylinder and mold set to temperatures of 300°C and 80°C respectively. The results of the measurements are shown in Table 1, indicating that the material possesses excellent properties.

Comparative Example 1

Table 1 shows also the variation in viscosity of the Nylon 4,6 sample from example 1, however without the addition of γ - aminopropyltriethoxysilane, indicating that thermal decomposition causes a large decrease therein.

Comparative Example 2

Test pieces obtained through the procedures of example 1 except that 5 parts by weight of γ - aminopropyltriethoxysilane had been added, showed considerable bleed-out of silane compounds and an inferior appearance.

Examples 2 to 9

Table 1 shows the measured physical properties of the test pieces obtained through the operation of example 1, the samples and addition ratios of nylon 4,6 and silane compounds being changed. In all cases it was found that the polyamide resin compositions according to the invention showed superior in thermal stability, strength, rigidity, impact resistance and heat resistance.

Experiment 10

A mixture obtained by adding 0.1 parts by weight of γ - aminopropyltrimethoxysilane and 45 parts by weight of a chopped strand glass fiber to 100 parts by weight of the nylon 4,6 pellets having a relative viscosity of 3.70 was melted, kneaded and pelletized at a temperature of 310°C by using a 65 mm aperture extruder. The results of the measurements as described in the example 1 have been obtained:

Relative viscosity variation on melting as a function of time.

| | |
|---|---|
| Initial value: | 3.64 |
| 310°C/10 min.: | 3.40 |
| 310°C/20 min.: | 3.10 |
| 310°C/30 min.: | 3.01 |
| Tensile strength: | 1,900 kg/cm$^2$ |
| Bending strength: | 2,800 kg/cm$^2$ |
| Bending modulus: | 97,000 kg/cm$^2$ |
| Izod impact strength: | 9 kg · cm/cm notch |
| Thermal deformation temperature: | 290°C |

TABLE 1

| | Embodiment 1 | Comparative Example 1 | Embodiment 2 | Embodiment 3 | Embodiment 4 |
|---|---|---|---|---|---|
| Polyamide[a] (Relative viscosity) | N 4,6 (3,90) | N 4,6 (3,90) | N 4,6 (3,90) | N 4,6 (3,80) | N 4,6 (3,80) |
| Silane compound | γ-aminopropyl-triethoxysilane | None | γ-aminopropyl-triethoxysilane | γ-aminopropyl-trimethoxysilane | γ-aminopropyl-trimethoxysilane |
| (Amount) (parts by weight) | (0.1) | | (0.5) | (0.2) | (0.1) |
| Relative viscosity change in melt residence | | | | | |
| Initial value | 3.85 | 3.85 | 3.85 | 3.72 | 3.75 |
| 310°C/10 min. | 3.43 | 3.02 | 3.50 | 3.40 | 3.42 |
| 310°C/20 min. | 3.20 | 2.60 | 3.26 | 3.18 | 3.17 |
| 310°C/30 min. | 3.01 | 2.50 | 3.05 | 3.01 | 3.03 |
| Tensile strength at yield (kg/cm$^2$) | 1,030 | 1,040 | 1,030 | 1,030 | 1,040 |
| Elongation at break (%) | 25 | 20 | 23 | 18 | 22 |
| Flexural strength (kg/cm$^2$) | 1,160 | 1,160 | 1,150 | 1,140 | 1,140 |
| Flexural modulus (kg/cm$^2$) | 30,200 | 30,400 | 30,100 | 30,200 | 30,300 |
| Izod impact strength (kg · cm/cm notch) | 7 | 7 | 7 | 7 | 7 |
| Heat distortion temperature (°C) (Load 18.6 kg/cm$^2$) | 175 | 175 | 173 | 175 | 174 |

[a] N 4,6: Polytetramethylene adipamide

TABLE 1 (Continued)

| Embodiment | 5 | 6 | 7 | 8 | 9 |
|---|---|---|---|---|---|
| Polyamide[a]<br>(Relative viscosity) | N 4,6<br>(5.70) | N 4,6<br>(3.25) | N 4,6/6:95/5<br>(4.70) | N 4,6/6,6:90/10<br>(3.50) | N 4,6//N 6,6:90<br>(3.40) |
| Silane compound<br><br>(Amount) (parts by weight) | $\gamma$-glycidoxypropyl-<br>trimethoxysilane<br>(0.3) | vinyl-<br>trimethoxysilane<br>(0.1) | $\gamma$-methacryloxypro-<br>pyltriethoxysilane-<br>(0.5) | vinyl-<br>triacetoxysilane<br>(0.1) | $\gamma$-aminopropyl<br>triethoxysilane<br>(1.0) |
| Relative viscosity change<br>in melt residence<br>Initial value<br>310°C/10 min.<br>310°C/20 min.<br>310°C/30 min. | 5.56<br>4.70<br>3.98<br>3.60 | 3.20<br>2.95<br>2.80<br>2.76 | 4.61<br>4.02<br>3.83<br>3.60 | 3.44<br>3.30<br>3.11<br>3.00 | 3.36<br>3.21<br>3.08<br>2.99 |
| Tensile strength at yield ($kg/cm^2$) | 1,040 | 1,030 | 980 | 950 | 1,010 |
| Elongation at break (%) | 36 | 30 | 40 | 42 | 10 |
| Flexural strength ($kg/cm^2$) | 1,140 | 1,150 | 1,080 | 1,050 | 1,100 |
| Flexural modulus ($kg/cm^2$) | 30,200 | 30,300 | 29,600 | 29,000 | 30,000 |
| Izod impact strength<br>(kg · cm/cm notch) | 7 | 7 | 8 | 8 | 6 |
| Heat distortion temperature (°C)<br>(Load 18.6 $kg/cm^2$) | 175 | 175 | 164 | 152 | 170 |

[a]N 4,6: Polytetramethylene adipamide
N 4,6/6: Poly(tetramethylene adipamide/caproamide) copolymer (95/5 wt%)
N 4,6/6,6: Poly (tetramethylene adipamide/hexamethylene adipamide) copolymer (90/10 wt%)
N 4,6//N 6,6: Mixture of polytetramethylene adipamide and polyhexamethylene adipamide (90//10 wt%)

## EP 0 203 136 B1

### Claims

1. Polyamide resin composition consisting of 100 parts by weight of a polyamide containing tetramethylene adipamide as main component and 0,01 to 3 parts by weight of at least one compound selected from aminosilanes, epoxysilanes and vinylsilanes.

2. Polyamide resin composition according to claim 1 containing 0.02 to 2 parts by weight of at least one compound selected from aminosilanes, epoxysilanes and vinylsilanes.

3. Polyamide resin composition according to claim 1 containing at least one compound selected from γ - aminopropyltrimethoxysilane, γ - aminopropyltriethoxysilane, γ - glycidoxypropyltrimethoxysilane, vinyltrimethoxysilane and γ - methacryloxypropyltriethoxysilane.

4. Moulded articles mainly consisting of a polyamide resin composition according to one of the claims 1—3.

5. Process for the preparation of a thermal stabilized polyamide composition containing tetramethylene adipamide as main component by the addition of 0,01 to 3 parts by weight of at least one compound selected from aminosilanes, epoxysilanes and vinylsilanes to 100 parts by weight of the polyamide in the melt.

### Patentansprüche

1. Polyamidharzzusammensetzung bestehend aus 100 Gew.Teilen eines Polyamids, das Tetramethylenadipinsäureamid als Hauptbestandteil enthält, und 0,01 bis 3 Gew.Teilen mindestens einer Verbindung ausgewählt aus Aminosilanen, Epoxysilanen und Vinylsilanen.

2. Polyamidharzzusammensetzung nach Anspruch 1 enthaltend 0,02 bis 2 Gew.Teile mindestens einer Verbindung ausgewählt aus Aminosilanen, Epoxysilanen und Vinylsilanen.

3. Polyamidharzzusammensetzung nach Anspruch 1 enthaltend mindestens eine Verbindung ausgewählt aus γ - Aminopropyltrimethoxysilan, γ - Aminopropyltriäthoxysilan, γ - Glycidoxypropyltrimethoxysilan, Vinyltrimethoxysilan und γ - Methacryloxypropyltriäthoxysilan.

4. Formgegenstände, die hauptsächlich aus einer Polyamidharzzusammensetzung nach einem der Ansprüche 1 bis 3 bestehen.

5. Verfahren zur Herstellung einer wärmestabilisierten Polyamidzusammensetzung, die Tetramethylenadipinsäureamid als Hauptbestandteil enthält, durch Zusetzen von 0,01 bis 3 Gew.Teilen mindestens einer Verbindung ausgewählt aus Aminosilanen, Epoxysilanen und Vinylsilanen zu 100 Gew.Teilen des Polyamid in der Schmelze.

### Revendications

1. Composition de résine polyamide comprenant 100 parties en poids d'un polyamide contenant du tétraméthylène - adipamide comme composant principal et 0,01 à 3 parties en poids d'au moins un composé choisi parmi les amino-silanes, époxy-silanes et vinyl-silanes.

2. Composition de résine polyamide selon la revendication 1, contenant 0,02 à 2 parties en poids d'au moins un composé choisi parmi les amino-silanes, les époxy-silanes et les vinyl-silanes.

3. Composition de résine polyamide selon la revendication 1, contenant au moins un composé choisi parmi le γ - aminopropyl - triméthoxysilane, le γ - aminopropyl - triéthoxysilane, le γ - glycidoxypropyl - triméthoxysilane, le vinyltriméthoxysilane et le γ - méthacryloxypropyl - triéthoxysilane.

4. Articles moulés consistant principalement en une composition de résine polyamide selon l'une des revendications 1 à 3.

5. Procédé de préparation d'une composition de polyamide thermiquement stabilisée contenant du tétraméthylène - adipamide comme composant principal, par addition de 0,01 à 3 parties en poids d'au moins un composé choisi parmi les amino-silanes, époxy-silanes et vinyl-silanes à 100 parties en poids du polyamide dans la masse de fusion.